# EUROPEAN PATENT APPLICATION

(11) **EP 2 124 248 A1**
(43) Date of publication of application: **25.11.2009**
(21) Application number: 08156804.0
(22) Date of filing: 23.05.2008
(51) Int. Cl.: H01K 1/32, H01K 1/34, H01K 3/00

(54) **Light bulb**

(71) Applicant: Flowil International Lighting (HOLDING) B.V., 1097 JB Amsterdam (NL)
(72) Inventor: Hooker, James D., 3200 Aarschot (BE); Van de Poel, Gunther, 3473 Waanrode (BE)
(74) Representative: Zech, Stefan Markus

(57) **Abstract**

A light bulb portion (10) comprising a base (20) and a hollow bulb (30) attached to the base (20), wherein the base (20) further comprises fixation means (21) for receiving electrical connections (41) of a filament capsule (40) and for rigidly holding the filament capsule (40) in a desired position and orientation. The said filament capsule (40) generating light upon passing electrical current through the filament (42); and wherein the bulb (30) is sized and shaped to surround a filament capsule (40) when one is connected with the base (20) and has a coating of an infrared reflective material (31) on at least a part of either its inner (32) or outer (33) surface, or on both of its inner (32) and outer (33) surfaces.

## Description

Incandescent filament light bulbs are extremely well known and find use in a wide variety of application and locations. For example, the vast majority of houses employ incandescent filament lights as these are cheap to produce and thus the cost savings can be passed on to the user. Such light bulbs operate by passing current through a high resistant filament, which thus leads to the filament heating up and glowing near white hot. Once the filament is glowing, a large quantity of light is produced.

Significant drawbacks are encountered with incandescent filament light bulbs, in particular the main drawback is that when the filament is glowing such that it produces light, an extremely large percentage of the radiation being given off by the filament is in the infrared wavelength range. Unfortunately, with regards a light bulb, the infrared radiation is considered as significant losses, as such radiation is invisible to the human eye.

In order to improve the energy efficiency of incandescent filament lights, infrared reflective coatings have been employed on the bulb section of the light. The principle behind such coatings is that of the radiation given off from the filament, the visible wavelengths pass straight through the coating unaffected, whereas a significant portion of the radiation given off in the form of infrared wavelengths is reflected off the coating back toward the filament. By reflecting the infrared radiation back toward the filament; the filament will absorb some of this infrared radiation and thus be heated further.

Either the power consumption by the light bulb can be controlled such that the same luminous intensity is given off for lower power, the lower power being a result of the reflected heat heating the filament to a higher temperature than would be associated with passing current through the filament, or for the same power a brighter and hotter light spectrum is given off.

### A typical process for making such a light bulb with an infrared coating, is as follows:

- 1.: Form glass bulb material to the desired optical profile.
- 2.: Mount the filament on the lead-through wires, which will be sealed into the bulb.
- 3.: Bring the filament to the desired location at the optical focus of the bulb.
- 4.: Heat the glass to cause softening in the seal region.
- 5.: Mechanically deform the softened glass to seal around the lead-through wires.
- 6.: Dose the lamp with the required filling and tip-off.
- 7.: Coat the outer surface of the bulb with the light-transmissive and infrared reflective coating.

Whilst this a relatively straightforward method, severe disadvantages do arise. The primary problem with the above method is ensuring that the filament remains at the desired position of the light bulb during formation. If the filament within the light bulb is slightly off the focal point of the reflected radiation, the advantages of the infrared reflective coating are significantly reduced. In other words, the filament does not get the full infrared radiation reflected back from the coating, and thus misses out on a significant secondary heating therefrom. Another problem with the standard method, is that when the light bulb is being sealed or tipped off, the material must be heated to a high temperature so as to allow the glass bulb to be appropriately sealed. Such temperatures are so high that significant evaporation occurs of the bulb material, and such evaporated products will tend to condense in cooler regions of the bulb. Such condensation of evaporated materials will lead to imperfections and scattering points on the surface of the bulb, which will also dramatically reduce the level of infrared radiation reflected back on to the filament.

Further problems which arise from the standard method, is that the filament will be generally quite close to the glass bulb, and will thus lead to the glass bulb having an extremely high temperature. Indeed, it is possible for the temperature of the glass bulb to be well in excess of 500°C, which thus leads to significant restrictions on the types of infrared reflective coating that can be used. Many of the infrared reflective coatings which are desirable, will tend to be destroyed by the high temperatures of the glass bulb, thus severely limiting the choice of materials available. Additionally, it is only practical to provide the infrared reflective coating on the external surfaces of the light bulb due to limitations of the coating process, and obviously the external surface of the light bulb is far more prone to damage from simple use or knocks during use. As such, damage to the infrared reflective coating will again severely impact on the effectiveness of providing the coating and energy savings associated therewith. This requirement for a hard coating further limits the choice of suitable materials.

As has been highlighted above, it is necessary that the profile of the bulb be exact such that the reflection of the infrared radiation back on to the filament is done in a very precise manner. To achieve this, the bulb must be formed with extremely close geometrical tolerances, otherwise the infrared radiation is reflected to a location not associated with the filament. Unfortunately, in standard filament light bulbs of today, many of these are of quite small size. As a result, it is necessary to use glass with an extremely high softening temperature, otherwise the bulb would deform during normal use. The use of such high softening temperature glasses adds significant additional problems during the formation, and will often mean that the final shape of the bulb does not exactly match that of the intended shape. Preferably, light bulbs are formed from a far lower softening temperature glass, as this allows for a much greater accuracy in structuring the bulb.

One final drawback, is that normal bulbs with the infrared coating applied thereon, will have a large pinch off area at the bottom thereof, which cannot be used to apply infrared coatings thereto. As such, a large amount of the infrared radiation can escape from such sections of the light bulb, or would block the reflection of infrared radiation reflected back on to the filament should part of the coating exist thereon, thus significantly reducing the effectiveness of the coating on such bulbs.

As can be seen from the above, a great many problems are associated with the formation of filament light bulbs with infrared coatings, and the present disclosure is directed to solving each of these problems.

### Summary of the Invention

The present invention provides a light bulb portion in accordance with independent claim 1. Further preferred embodiments are given in the dependent claims.

The claimed invention can be better understood in view of the embodiments of the light bulb portion described hereinafter. In general, the described embodiments describe preferred embodiments of the invention. The attentive reader will note, however, that some aspects of the described embodiments extend beyond the scope of the claims. To the respect that the described embodiments indeed extend beyond the scope of the claims, the described embodiments are to be considered supplementary background information and do not constitute definitions of the invention per se. This also holds for the subsequent "Brief Description of the Drawings" as well as the "Detailed Description of the Preferred Embodiments."

In particular, the present disclosure relates to providing a sectional portion of a light bulb. This light bulb portion is structured to comprise both a base and a bulb, but in itself does not comprise a specific filament therein. That is, the bulb of the light bulb portion does not comprise a naked filament which is to be used to generate light, rather it is being used to house a filament capsule. The filament capsule, being a filament contained within a capsule or light bulb and being entirely self contained, such that connection of electrical power through the filament capsule will lead to the light generation. The light bulb portion, has appropriate connecting and fixing means as part of the base, wherein these are used to electrically connect and physically hold the light capsule or bulb to the base. The bulb is then structured such that it will fit around this filament capsule thus providing a "bulb within a bulb" type structure. Additionally, it is advantageous for the outer bulb forming part of the light bulb portion to have a coating of an infrared reflective material thereon. Such an infrared reflective material reflects infrared radiation therefrom, whilst allowing visible radiation to pass through unaffected. By providing the infrared reflective coating on the outer bulb, it is possible to reflect the infrared radiation being given off from the preformed filament capsule back towards this capsule, and thus heat the capsule and filament therein. Such reflected infrared radiation is useful for increasing the temperature of the filament of the preformed capsule, without requiring additional electrical power which thus improves the efficacy of the preformed capsule. It is advantageous, if the filament capsule does not comprise an infrared reflective material coating thereon, rather the only coating of such material is provided on the outer bulb.

Further, the infrared reflective coating can be provided on at least a part, but preferably all, of either the inner or outer surface of the outer bulb. Further preferably, the coating of infrared reflective material is provided on the inner surface, so as to avoid mechanical damage to the coating from handling of the bulb, and to permit the use of certain coatings of high efficiency, but which lack the physical strength to be applied to the outer surface of the bulb.

As a further advantageous design, the shape of the outer bulb forming part of the light bulb portion can be selected such that it has a known focal point for infrared radiation reflected off the coating back into the centre of the bulb. By choosing the shape of the bulb of the light bulb portion accordingly, it is possible to have this focal point coincide with the expected location of the filament capsule. In particular, that it will have the focal point of the filament of this capsule. In such a way, the infrared radiation given off by the filament of the capsule will be reflected off the infrared reflective material coating, and will impinge back on the filament of the filament capsule. The filament will then be heated by such reflected radiation in a highly efficient manner, thus leading to the reduction in electrical power required for the same light signature.

The bulb of the light bulb portion can have a variety of different shapes, although most preferably these are limited to either a spherical or ogive shape. As will be clear, the spherical shape will clearly focus the reflected heat back onto the filament capsule, and the ogive shape will also allow for a good focussing of the reflected heat back onto the filament of the filament capsule.

Additional structure of the bulb in the light bulb portion, is the provision of a small slot. This slot is positioned and sized such that it will allow the bulb to pass over a filament capsule if this is present in the base of the light bulb portion. That is, the bulb can be positioned over the light capsule by passing this through the slot, and then the bulb can be attached to the base to form a complete lamp. By providing the slot with the smallest possible dimensions, the maximum surface area of the bulb can be achieved such that the maximum surface area of the infrared reflective material applied to the surface of the bulb can also be used. This allows for an increase in the amount of infrared radiation which can be reflected back onto the filament capsule.

As well as having the infrared reflective material coating on at least part of the surface of the bulb, it is also possible to provide a section of the bulb with an infrared and visible light reflective layer. Such a layer reflects both infrared radiation as well as visible light radiation, and is intended to provide a light bulb portion which can be used with a reflector type light housing. Additionally such material has the profound advantage of reflecting a broader spectrum range of radiation back towards the filament, so as to further enhance the efficacy of the lamp. Typically, the material which is infrared and visible light reflecting will be positioned towards the section of the bulb away from the base, such that the light will be reflected back toward the base and to the reflector of the light housing.

It is also possible to provide the bulb by means of two half bulbs. By having an upper and a lower half bulb which are manufacturable in a separate process, it is easy to ensure that the preformed filament capsule can be located at the exact focal point of the complete bulb. In particular, the lower portion of the bulb can be attached to the base prior to attachment of the preformed filament capsule, so as to make a lamp, and thus the capsule can be properly and securely located with respect to the base and this lower bulb section. Upon attachment of the upper bulb section, the location of the filament capsule will be unaffected, thus ensuring that it remains at the desired focal point of the infrared reflective material coating.

It is also possible to have the two halves of the bulb coated with different materials, such as the lower half coated with the simply infrared reflective material, and the upper half coated with the infrared and visible light reflective material. Further, if the light bulb has an ogive shape, it is possible that the lower half be fabricated to be approximately hemispherical, where as the upper half is possessed of the ogive shape. The upper half being of an ogive shape and provided with the infrared and visible light reflective layer is useful for improving the light which is reflected from a reflector housing; this is because the visible light reflected off the ogive section is sent in a direction away from the base of the light bulb portion.

In order to attach the bulb to the base, some form of attachment means may be provided thereon. For example, these attachment means could be in the form of a flange, or a screw thread or any other reliable attachment means. Further, the base can be provided with an appropriately shaped and structured housing means, so that the base and bulb can be appropriately fixed together. It is possible for this fixing to be of a permanent nature, also it is possible to allow the bulb to be removable from the base, so as to allow replacement of the preformed filament capsule.

Clearly, a combination of a filament capsule and the above described aspects of a light bulb portion, will lead to a fully functioning lamp. In particular, the base should be provided with appropriate connecting portions to connect to a light housing, such as a bayonet or screw thread.

It is intended that the method of production of the above mentioned light bulb portion or lamp be quite straightforward. In particular, the filament capsule is formed by any known technique, and does not require forming with a specifically high accuracy in its final shape. This is primarily because the infrared reflective coating is not provided on this capsule, rather it is provided on one of the inner or outer surfaces of the bulb.

Once the preformed capsule is provided, this can be affixed to the electrical and positional connections of the base, such that passing current through the electrical connections of the base will lead to the filament capsule to produce light. Finally, attachment of a bulb which comprises an infrared reflective coating on either its inner or outer surface, or portion thereof, will complete the lamp. Obviously, if the filament capsule is not present, the resulting structure will be that of the light bulb portion.

If the bulb is to be provided in two halves, it is possible to separately fabricate these perhaps by means of pressing. The lower half of the bulb is attached to the base, and then the filament capsule can be attached also to the base and the exact orientation and position of this capsule determined and set. Afterwards, the upper portion of the bulb can be attached to the lower portion to thus complete the bulb and ensure that the location of the filament capsule and filament thereof is exactly at the focal point of the bulb.

If two halves of the bulb are being used, it is possible to pre-coat, preferably the inner surfaces, of each half of the bulb with different reflective materials. In particular, the lower portion would be provided with an infrared reflective material, and the upper portion could be provided with an infrared and visible light reflective material.

### Brief Description of the Drawings

- Figure 1:: this shows a lamp according to a first aspect of the present disclosure, wherein a filament capsule is held within a light bulb portion.
- Figure 2:: this shows a further design for the present disclosure, wherein the lamp of Figure 1 has a bulb which is structured in two halves.
- Figure 3:: this figure shows the lamp shown in Figure 2 wherein the upper half of the bulb is provided with a coating which reflects infrared and visible light.
- Figure 4:: this figure shows a further possible design, wherein the upper portion of the bulb is provided with an ogive shape, as well as an infrared and visible light reflective layer.

### Brief Description of Preferred Embodiments

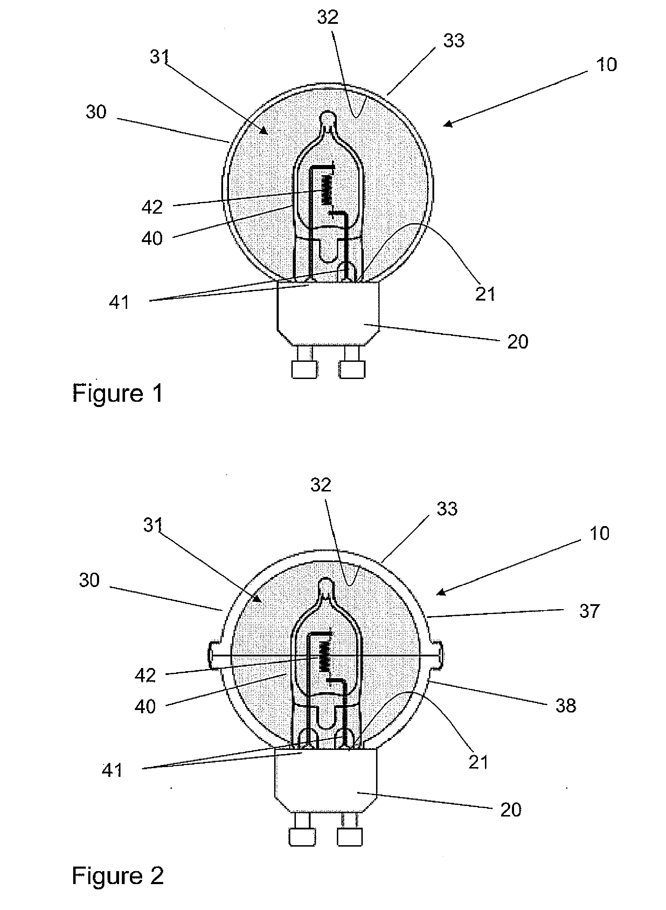

Each of Figures 1 to 4 show different aspects of the present disclosure as applied to a light bulb portion 10 or lamp 50. It will be appreciated from each of these figures, that they relate specifically to a full lamp 50, in which a preformed filament capsule 40 is enclosed within a light bulb portion 10, thus making the full lamp 50. This is by way of example only, and the specific disclosure is not limited to the full lamp 50, but rather to either this lamp 50 or simply the light bulb portion 10.

As can be seen from each of the figures, the light bulb portion 10 generally comprises a base 20 and a bulb 30. As is normal for prior known lamps, the bulb 30 is attached to the base 20 to make the light bulb portion 10. Contrary to most lamps in the art, however, is that the base 20 and bulb 30 of the present disclosure do not surround a bare filament, rather they are designed to surround a filament capsule 40. As can be seen from the figures, the filament capsule 40 is shown as a small halogen based incandescent filament light bulb. Again, this is purely by example, and the present disclosure would equally well apply to any filament capsule 40, and the small halogen based capsule 40 shown in the figures is purely by way of example.

The specific features of the present disclosure, relate to the light bulb portion 10 being adapted to house any chosen preformed filament capsule 40. As has been disclosed above, significant drawbacks are encountered with providing light bulbs incorporating an infrared reflective coating 31, in particular when such a coating is to be provided to a smaller filament capsule 40 as shown in the figures. The problems described above are each obviated by providing a light bulb portion 10 as shown in each of the figures, and as more fully described below.

As can be seen from the figures, the base 20 of the light bulb portion 10, is designed such that it will interface with an appropriate electrical output of a lamp housing. The connections shown in the figures is not intended as limiting, and of course any standard fitting can be provided on the base 20 and will function equally well. In order for the base 20 to accommodate the filament capsule 40, some form of fixation means 21 are provided. Such fixation means 21 are generally used to electrically contact and position the filament capsule 40 to the base 20. As will be immediately evident, by providing the base 20 with such fixation means 21, the filament capsule 40 will be held in a known location and orientation with respect to the base 20. Additionally, as the base 20 is connected with the bulb 30, the filament capsule 40 will also be oriented and fixed at a known location with respect to the bulb 30.

As is clear from each of the figures, the bulb 30 is shaped such that it will fully surround the filament capsule 40, when the bulb 30 is attached to the base 20, and when a filament capsule 40 is also provided attached to the base 20. Such a design can be considered as a lamp 50 in itself, wherein the lamp 50 comprises the light bulb portion 10 and filament capsule 40 electrically attached thereto. As will be appreciated, by providing electrical power in the normal way to the electrical contacts of the base 20, such power will be passed through to the electrodes 41 of the filament capsule 40, and thus the filament capsule 40 will produce light in the known manner.

It is specifically intended that the light bulb portion 10 be utilised with a filament capsule 40 which does not comprise a coating of an infrared reflective material 31. As has been discussed above, significant problems arise from appropriately manufacturing small filament capsules with infrared reflective material 31 coatings. As such, the filament capsule 40 is intended to simply be a normal filament capsule 40, and not one specifically structured to incorporate the coating of the infrared reflective material 31. The production of filament capsules 40 without coatings of infrared reflective materials 31 is extremely well known in the art, and also is a relatively straightforward procedure. Indeed, as it is not particularly crucial that the filament 42 of the filament capsule 40 is located at a specific position and orientation in the filament capsule 40, the restrictions on fabrication are significantly relaxed. Of course, whilst it is intended that the light bulb portion 10 be used with a filament capsule 40 without a coating of an infrared reflective material 31, the final lamp 50 can comprise a filament capsule 40 with a coating of an infrared reflective material 31. Naturally, however, as will be discussed below, the advantages of providing a coating of an infrared reflective material 31 are achieved by the light bulb portion 10, rather than the filament capsule 40.

The light bulb portion 10, comprising the base 20 and bulb 30, is provided with a coating of an infrared reflective material 31 on the bulb 30. In particular, at least a part of, but preferably the entire, inner 32 or outer 33 surface of the bulb 30 is coated with the infrared reflective material. By providing the infrared reflective material 31 coating on the bulb 30, infrared radiation given off by the filament capsule 40 contained within the light bulb portion 10 will be reflected off the infrared reflective material 31 coating, and back toward the filament capsule 40. In particular, the reflection of infrared radiation can be aimed to strike the filament 42 of the filament capsule 40. In this manner, the advantage of reflecting the infrared radiation back towards the filament of a light bulb is achieved, that is the infrared radiation will be used to heat the filament of the light generating portion, but the problems associated with fabricating preformed filament capsules 40 with the coating of infrared reflective material 31 are almost completely obviated.

As has been touched upon above, the filament capsule 40 does not require the coating of infrared reflective material 31; consequently the processing of the filament capsule 40 is improved and simplified, as the tolerances of filament 42 positioning, are removed. That is, the filament capsule 40 can be fabricated in any known technique, but the specific location of the filament 42 does not need to be explicitly controlled within the filament capsule 40 itself. As the coating of infrared reflective material 31 is not directly on the surface of the filament capsule 40, the surface and structure of the filament capsule 40 does not need to be explicitly controlled within tight tolerances, to ensure that the reflected infrared radiation strikes the filament 42. A further advantage with regards not applying the coating material 31 to the filament capsule 40, is that any evaporated material which has condensed on the filament capsule 40 will not lead to the reduction of reflection efficiency from the infrared reflective material 31 coating. As the preformed filament capsule 40 does not comprise the coating of infrared reflective material 31, even if impurities and condensed material is present on the surface of the filament capsule 40, either on the inner or outer surface thereof, these will not lead to a dramatic reduction in the reflected infrared radiation, as the infrared radiation is being reflected by the bulb 30, rather than a coating applied to the filament capsule 40. Once again, this improves the fabrication of the filament capsule 40, and allows for a less controlled tip-off and filling/sealing step.

Given that the inner or outer surfaces 32, 33, of the bulb 30 are separated somewhat from the filament 42 of the filament capsule 40, the bulb 30 will not experience the extremely high temperature that the filament capsule 40 would. That is, the distance afforded by having the bulb 30 positioned away from the filament capsule 40, will lead to a dramatic reduction in the temperature of the bulb 30. With the reduced temperature of the bulb 30, it is possible to utilise a far wider range of infrared reflective material 31 coatings. As has been discussed above, many of the desired infrared reflective materials 31, do not survive excessive temperatures, and certainly cannot be used on the surface of the filament capsule 40 directly. Given, however, that the temperature of the bulb 30 is much lower than this temperature, it is possible to use a far wider selection of coating materials 31, thus allowing for a reduction in cost and an improvement to the fabrication of the light bulb portion 10, and lamp 50.

Given also that the bulb 30 of the light bulb portion 10 does not need to be filled with a specific gas, in particular a halide gas, it is possible to provide the infrared reflective material 31 coating on the inner surface 32 of the bulb 30. Many infrared reflective materials 31 are attacked and damaged and even destroyed by gases generally employed in incandescent filament lamps, in particular the halide gases often favoured in high energy or high brightness lamps. As the bulb 30 only comprises the filament capsule 40, and does not have a bare filament for generating light, the bulb 30 does not need to be filled with a specific gas, and thus gas in the interior of the bulb 30 will not react with any infrared reflective material 31 applied to the inner surface 32. As is obvious, if the coating of infrared reflective material 31 is on the inner surface 32 of the bulb 30, this reflective coating is not going to be damaged by mechanical stresses. In particular, when the user of the lamp 50 handles the bulb 30 of the light bulb portion 10, the coating of infrared reflective material 31 will not be damaged. Further, should any mechanical interaction occur with the outer surface 33 of the bulb 30, the coating of infrared reflective material 31 will remain unaffected.

Additionally, as the bulb 30 will not be subjected to excessively high temperatures, i.e. those of 500°C and above, which are quite normal for filament capsules 40, it is possible to provide the bulb from a lower softening temperature glass. For example, this lower softening temperature glass could be a soda-lime-silicate or a borosilicate glass. Techniques for producing bulbs 30 from such lower softening temperature glass are well established, and further this leads to a dramatic improvement in the ease of fabricating the bulb 30. Further, as the bulb 30 will necessarily be larger than the filament capsule 40, the bulb 30 can be fabricated by well established methods for fabricating glass bulbs, and will also lead to a far greater degree of geometrical precision. That is, standard pressing and blowing techniques can be utilised to form the bulb 30 from a lower softening temperature glass, and the end results will be an extremely well controlled size and shaped bulb 30.

As is clear from the above, by structuring a light bulb portion 10 as described, in particular with a base 20 and bulb 30 wherein the bulb 30 has a coating of an infrared reflective material 31, significantly improves the production of filament based lamps with infrared reflective material 31 coatings thereon. Each of the known problems with providing filament capsules with a coating of infrared reflective material 31 are obviated by allowing a normal filament capsule 40 to be fabricated, and incorporating the coating of infrared reflective material 31 on a separate outer bulb 30. This not only improves the ease of fabrication, but also allows that the bulb 30 can be much more accurately and easily made whilst still reflecting the infrared radiation back to the filament 42 of the filament capsule 40. As was mentioned above, because the filament capsule 40 is held in the base 20 at a well defined location, the location of the filament 42 is known, and thus the light reflected from the infrared reflective material 31 on the bulb 30 will heat the filament 42.

Advantageously, the bulb 30 is structured such that the filament 42 of the filament capsule 40 will lie at its focal point, with regards reflected infrared radiation. That is, the filament 42 will be producing the infrared radiation in a generally uniform manner and this will also be radiated from an approximate point source. By appropriately structuring the bulb 30, such that the filament 42 in the filament capsule 40 held in the base 20 will lie at the focus point of the bulb 30, will greatly improve the efficiency of the light bulb portion 10. In other words, the infrared radiation will be radiated from the filament 42, and will be reflected back from the infrared reflective material 31 on the surface of the bulb 30. As the infrared radiation will be reflected directly back to the focus point of the bulb 30, and as the filament 42 is intended to be positioned at this focal point, the reflected infrared radiation will lead to the best and highest increase in the temperature of the filament 42. By structuring the bulb 30 accordingly, the efficiency of a lamp 50 comprising the light bulb portion 10 and filament capsule 40 will be significantly increased and improved.

A further advantageous possibility for the bulb 30 is to structure this such that only a small slot 34 is given to allow the filament capsule 40 to pass therethrough. The slot 34 is not visible in any of the figures. By providing the bulb 30 with only a small slot 34 in its surface, allows for the bulb 30 to be an almost complete and enclosed structure. In this way, the maximum surface area of the bulb 30 is provided upon which the coating of infrared reflective material 31 can be provided. In other words, the bulb 30 extends right down and nearly into contact with the filament capsule 40 when held in the base 20 of the light bulb portion 10, and thus provides the largest surface area for provision of the infrared reflective material 31. Such an increase to the surface area of the bulb 30, and likewise increase in the surface area of the coating of the infrared reflective material 31 will also increase the amount of reflected light directed back onto the filament 42 and the filament capsule 40, thus leading to an improvement in the efficiency.

In order to readily attach the bulb 30 to the base 20, some form of attachment means 38 are provided on the bulb 30. These attachment means 38 interact with appropriately sized and shaped housing means 22 on the base 20. Obviously, there is no limitation to the possible options for the attachment means 38 and housing means 22, all that is required is that the bulb 30 can be readily attached to the base 20 in a reliable and accurate fashion. That is, the attachment means 38 interacting with the housing means 22 will ensure that the bulb 30 is located at a known location and orientation with respect to the base 20, and thus the focal point of the bulb 30, or at least the focal point of infrared radiation reflected from the infrared reflective material 31 coating, will be at a well known and defined position relative to the base 20. By appropriately structuring the attachment means 38 and housing means 22, the focal point will line up with the filament 42 of the filament capsule 40 when this is held by the fixation means 21 in the base 20.

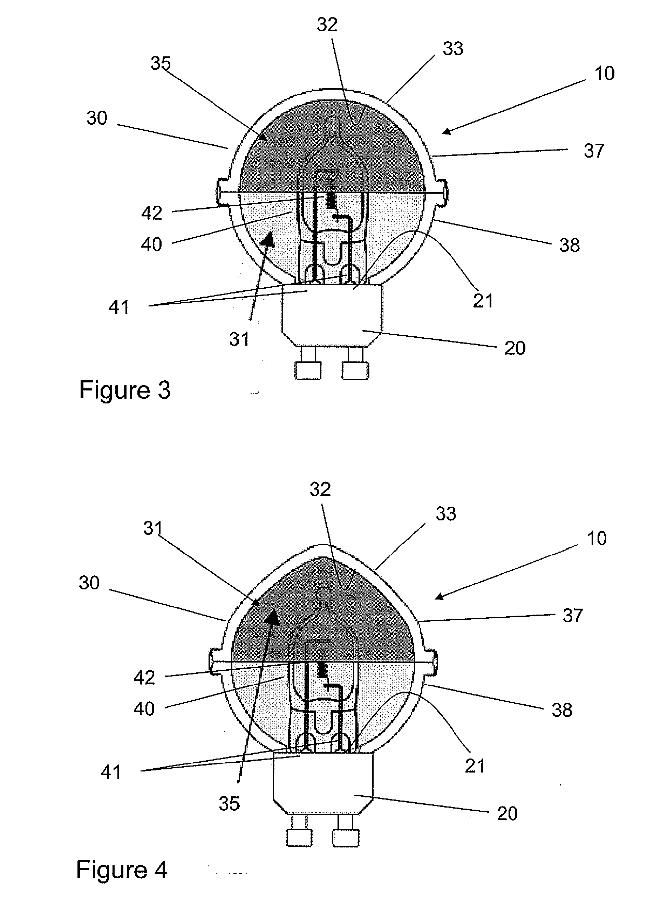

One example for the attachment means 38 is a simple flange provided on the outer surface 33 of the bulb 30, which interacts with an appropriate friction fit as the housing means 22 on the base 20, thus allowing the bulb 30 to be attached to the base 20 in a known manner. Other additional possibilities, is the provision of a flange with an external screw thread on the bulb 30, wherein this external screw thread interacts with an internal screw thread provided by the housing means 22 of the base 20. Whilst both of these are removable fixation mechanism, so as to allow the bulb 30 to be removed from the base 20 and thus could allow for the light bulb portion 10 to have a new filament capsule 40 added thereto, permanent fixing mechanism, are also possible for the attachments means 38 and housing means 22. Essentially, the only requirement is that these are of a known structure that will appropriately locate the bulb 30 relative to the base 20 and filament capsule 40, when attached to the base 20, so that the infrared reflected radiation is striking the filament capsule 40, and preferably the filament 42 thereof.
As can be seen in each of Figures 3 and 4, it is possible to provide the bulb 30 with two separate coatings. As is seen in these figures, the lower portion of the bulb 30 is provided with an infrared reflective material 31 coating, and the upper section is provided with a coating of an infrared and visible light reflective material 35. By upper portion, this is defined as the section of the bulb 30 which is generally away from the base 20. Whilst the two figures of 3 and 4 show a design to be described below wherein the bulb 30 comprises two halves 36, 37, it is obvious that the single piece bulb 30 as shown in Figure 1 could also comprise two coating materials, one of which being only infrared reflective material 31 and the other being an infrared and visible light reflective material 35. Use of the infrared and visible light reflective material 35 is to avoid direct glare from the filament 42 for the user. Lamps 50 as shown in Figures 3 and 4 are known in the art, and the visible light striking the upper section of the bulb 30, that section having the infrared and visible light reflective material 35 thereon, will be reflected back toward the base 20. This reflected visible light then interacts with a reflector provided on the lamp housing and this light is then provided into the room. Such reflective light avoid stray light rays and leads to improved optical control above conventional lamp and reflector arrangements. Also since the IR and visible light reflective material returns a broader range of wavelengths to the filament, and thus more energy in total, the efficacy of the light source is somewhat higher than when only an IR reflective coating is employed.

As is shown in Figure 4, it is also possible to provide the bulb 30 with an ogive section. In particular, this ogive section is intended to be provided with the coating of infrared and visible light reflective material 35, although this is not a specific requirement. The ogive section to the bulb 30 will tend to reflect the visible light such that it avoids impinging upon the base 20, and is rather directed to the reflector of the light housing. This structure of bulb 30 is advantageous for increasing the amount of visible light being reflected into the beam of light from the luminaire. Whilst Figure 4 shows the option with two halves 36, 37 of the bulb 30, it is also possible to structure a single piece bulb 30 with this shape, so as to improve the amount of visible light directed towards the reflector of the light housing and thus then into the useful beam.

As has been touched upon above, it is not necessary to provide the bulb 30 by a single piece which is structured into the appropriate shape. As is seen in each of Figures 2 to 4, it is possible that the bulb 30 be provided by two half bulbs 36, 37 which are appropriately shaped. The lower half 36 is structured such that this will appropriately interact with the base 20, and thus has the relevant attachment means 38. Additionally, the lower half 36 will advantageously be provided with the slot 34 as described above, such that the lower half 36 will provide the largest surface area for the coating of infrared reflective material 31. In this manner, the slot 34 can be even smaller than that of the single piece bulb option, in that the lower half 36 can be attached to the base 20 prior to provision of the filament capsule 40. As such, the slot 34 can be even smaller, and literally be large enough to accommodate only the electrical connections 41 of the filament capsule 40, or at least the lowest section of the filament capsule 40.

Attached to the lower half 36 of the bulb 30 is the upper half 37. As shown in Figures 2 or 4, this upper half can either be approximately hemispherical in shape, or even ogive in shape. Of course, these two are merely options, and any shape of the upper half 37 of the bulb 30 can be included, although advantageously the focal point for reflected infrared radiation should still be the filament 42 of the filament capsule 40 when also housed in the base 20 and within the bulb 30. As is clear, the two halves 36, 37 of the bulb 30 can be independently fabricated, which also leads to a general improvement in the geometrical precision of each half 36, 37 of the bulb 30. Further, by fixing the lower half 36 to the base 20 and then attaching the filament capsule 40, allows for the reduction in slot size 34. Finally, once the filament capsule 40 is in place, the upper half can be appropriately attached to the lower half 36. By providing the two halves 36, 37, it is possible to structure these by a simple technique such as pressing, which also improves the workability of the fabrication.

As shown in Figures 3 and 4, it is possible to coat the lower half 36 of the bulb 30 with a coating of infrared reflective material 31, and then the upper half 37 with a coating of infrared and visible light reflective material 35. This lead to a significant improvement in the fabrication of such reflector type lamps 50, as each half 36, 37 can be individually manufactured. Further, if the upper half 37 is to be structured with an ogive shape, this can also be readily achieved, and only half of the bulb 30 need be structured in such a manner.

Formation of a lamp 50 comprising the light bulb portion 10 and a filament capsule 40 is quite straightforward. Firstly, the filament capsule 40 is fabricated by any of the well known prior art techniques. Again, this filament capsule 40 does not require the external coating of the infrared reflective material 31. The next step would be to position the preformed filament capsule 40 within the fixation means 21 of the base 20. Again, the fixation means 21 provide both position and orientation accuracy, as well as allowing electricity to be provided to the electrical connections 41 of the filament capsule 40.
Such fixation means 21 will thus hold the filament capsule 40 at a well known and predefined place with respect to the base 20, and will rigidly hold the filament capsule 40 therein. Forming a bulb 30 with at least a portion of its surface covered by an infrared reflective material 31 coating and attaching this to the base 20 will thus appropriately surround the filament capsule 40 held within the base 20. At this point, the lamp 50 is complete, and the infrared radiation generated from the filament 42 will be reflected from the coating of infrared reflective material 31 on the bulb 30, and thus lead to an improvement in the operation of the lamp 50.

If the bulb 30 is to be provided by two halves 36, 37, the method is adjusted such that each of the two halves 36, 37 is independently fabricated. For example, it is advantageous if this fabrication is done by a pressing technique. Once the two halves 36, 37 are fabricated, the lower half 36 is attached to the base 20 of the light bulb portion 10, and then the filament capsule 40 is attached and held at the desired position with respect to the base 20 and the lower half 36 of the bulb 30. Finally, the upper half 37 of the bulb 30 is attached to the lower half 36, and the location and orientation of the filament capsule 40 and filament 42 thereof, is unaffected and will thus still lie at the focal point for reflected light from the coating of infrared reflective material 31.

Should the lamp 50 be a reflective lamp 50, the upper section of the bulb 30 is coated with a coating of an infrared and visible light reflective material 35. This is either done in addition to or instead of the coating of infrared reflective material 31 in this part of the bulb 30. If the bulb 30 comprises two halves 36, 37, the upper half 37 is provided with the coating of infrared and visible light reflective material 35 in an advantageous step. The lower half 36 may be provided with simple the infrared reflective material 31 coating.

As has been described above, the present disclosure relates to either a full lamp 50 or at least a light bulb portion 10 for an incandescent light bulb. In particular, this is described such that a normal prefabricated filament capsule 40 can be utilised and a secondary bulb 30 is provided with an infrared reflective material 31 coating such that this coating reflects the infrared radiation on to the filament capsule 40. No specific combination of features is considered as especially required or necessary in the above disclosure, the scope of protection is as defined in the attached claims.

### Reference numerals:

- 10: Light bulb portion
- 20: Base
- 21: Fixation means
- 22: Housing means
- 30: Bulb
- 31: Infrared reflective material
- 32: Inner surface
- 33: Outer surface
- 34: Slot
- 35: Infrared and visible light reflective Material
- 36: lower half
- 37: upper half
- 38: Attachment means
- 40: Filament capsule
- 41: Electrical connections of 40
- 42: Filament of 40

## Claims

1. A light bulb portion (10) comprising:
a base (20) and a hollow bulb (30) attached to the base (20), wherein
the base (20) further comprises fixation means (21) for receiving electrical connections (41) of a filament capsule (40) and for rigidly holding the filament capsule (40) in a desired position and orientation, said filament capsule (40) generating light upon passing electrical current through the filament (42); and
wherein
the bulb (30) is sized and shaped to surround a filament capsule (40) when one is connected with the base (20) and has a coating of an infrared reflective material (31) on at least a part of either its inner (32) or outer (33) surface, or on both of its inner (32) and outer (33) surfaces.

2. The light bulb portion (10) of claim 1, wherein the bulb (30) is specifically shaped such that it would reflect and refocus infrared radiation coming from a filament capsule (40) connected with the base (20) back to the filament capsule (40).

3. The light bulb portion (10) of either one of claims 1 or 2, wherein the bulb (30) has an approximately spherical shape, or an ogive shape.

4. The light bulb portion (10) of any one of the preceding claims, wherein the bulb (30) has a slot (34) therein which is of a size and shape just large enough to allow the bulb (30) to fit over a filament capsule (40) when it is attached to the base (20), so as to allow the bulb (30) to be attached to the base (20) and house the filament capsule (40).

5. The light bulb portion (10) of any one of the preceding claims, wherein the bulb (30) comprises a coating of an infrared and visible light reflective material (35) on at least a part of either its inner (32) or outer (33) surface.

6. The light bulb portion (10) of any one of the preceding claims, wherein the bulb (30) comprises two halves (36, 37) which are independently manufacturable and affixed together in the light bulb (10), which may be individually coated with one or both of an infrared reflective material (31) and an infrared and visible light reflective material (35).

7. The light bulb portion (10) of any one of the preceding claims, wherein the bulb (30) is provided with attachment means (38) for attachment with appropriate housing means (22) on the base (20).

8. A lamp (50) comprising the light bulb portion (10) as defined in any of the preceding claims, wherein a filament capsule (40) is provided and held within the base (20) by the fixation means (21).

9. A method of making a light bulb (10), comprising:
providing a filament capsule (40) by any known method, the filament capsule (40) having electrical connections (41) for allowing electricity to pass there-through,
fixing the filament capsule (40) by means of the electrical connections (41) into a base (20) which is provided with fixation means (21) for rigidly holding the filament capsule (40) in a desired position and orientation,
forming a hollow bulb (30) and applying a coating of an infrared reflective material (31) to either the inner (32) or outer (33) surface of the bulb (30), and
attaching the bulb (30) to the base (20), so that the filament capsule (40) is contained therein.

10. The method of claim 9, wherein the bulb (30) is formed as two separate halves (36, 37) and the first half (36) is attached to the base (20), then the filament capsule is attached to the base (20) and then the second half (37) of the bulb (30) is attached to the first half (36) of the bulb (30).

11. The method of claim 10, wherein the first half (36) is coated with an infrared reflective material (31) and the second half (37) is coated with an infrared and visible light reflective material (34) on either or both of their inner (32) and outer (33) surfaces, prior to being attached to the base (20).

12. The method of either of claims 10 or 11, wherein the two halves (36, 37) are formed by pressing.
